# EUROPEAN PATENT SPECIFICATION

(11) **EP 3 514 593 B1**
(45) Date of publication and mention of the grant of the patent: **11.11.2020**
(21) Application number: 18192056.2
(22) Date of filing: 31.08.2018
(51) Int. Cl.: G02B 6/44

(54) **FLEXIBLE CENTRAL TUBE RIBBON OPTICAL FIBER CABLE**
GLASFASERKABEL MIT FLEXIBLEM ZENTRALEM ROHRBAND
CÂBLE À FIBRE OPTIQUE À RUBAN DE TUBE CENTRAL FLEXIBLE

(30) Priority: 23.01.2018 IN 201811002718
(43) Date of publication of application: 24.07.2019
(60) Divisional application: 20199964.6
(73) Proprietor: Sterlite Technologies Limited, 431 136 Maharashtra (IN)
(72) Inventor: KUMAR, Sravan, 431136 Maharashtra (IN); SAHOO, Kishore Chandra, 431136 Maharashtra (IN); MOTURU, Pavan Kumar, 431136 Maharashtra (IN); MISHRA, Atul, 431136 Maharashtra (IN); CHINTADA, Kavya, 431136 Maharashtra (IN)
(74) Representative: Hepworth Browne

(56) References cited:
- EP-A1- 0 985 946
- EP-A1- 3 104 204
- US-A1- 2002 122 640
- US-B2- 7 184 633

## Description

### TECHNICAL FIELD

The present disclosure relates to the field of optical fiber cables. More particularly, the present disclosure relates to the optical fiber cables for indoor, outdoor and underground applications.

### BACKGROUND

Optical fiber cables have secured an important position in building network of modern communication systems across the world. One such type of optical fiber cables are optical fiber ribbon cables. These optical fiber ribbon cables are installed in ducts. These optical fiber ribbon cables include a plurality of optical fiber ribbons. Each optical fiber ribbon includes a number of optical fibers placed adjacent and bonded together with a matrix material. These optical fiber ribbons may be held inside a central loose tube which may be covered by additional layers such as water blocking layers, armouring layer, sheathing layer and the like. Typically, these optical fiber ribbon cables include strength members embedded in a jacket of the cable. In addition, these optical fiber ribbon cables can be prepped and spliced rapidly through mass fusion splicing. This leads to easy installation, less installation time, low installation cost and the like. Traditionally, these optical fiber ribbon cables do not have any gel present inside the core which reduces preparation time.

The currently available optical fiber ribbon cables have several drawbacks. These optical fiber ribbon cables lack in flexibility and have high bend radius due to the presence of embedded strength members in the jacket. These strength members induce preferential bending in the cable. In preferential bending, the optical fiber cable having diagonally opposite strength members bend readily in the plane that passes through the strength members but do not bend readily in an orthogonal plane. Such preferential bending is undesirable for cable blowing operations.

US-A1-2002/0122640 and EP-A1-0985946 disclose optical fiber cables comprising two pairs of strength members embedded inside the second layer. EP-A1-3104204 discloses an optical fiber cable comprising a fourth layer having an outer diameter in the range 13mm to 15mm. US-B2-7184633 discloses an opical fiber cable with increased flexibility having an outer diameter of less than 32mm.

In light of the above stated discussion, there is a need for an optical fiber cable which can overcome the disadvantages.

### SUMMARY

According to the invention there is provided an optical fiber cable comprising: a plurality of optical fiber ribbons lying substantially along a longitudinal axis passing through a geometrical center of the optical fiber cable; a first layer surrounding the plurality of optical fiber ribbons; a second layer concentrically surrounding the first layer, wherein the second layer is a dry loose tube layer; a third layer concentrically surrounding the second layer; a fourth layer concentrically surrounding the third layer; and two pairs of strength members embedded inside the second layer, characterized in that the first layer has a first thickness (t₁) in a range of 0.2 millimetre to 0.3 millimetre, the second layer has a first diameter (d₁) in a range of 11 millimetres to 12 millimetres, the second layer has a second thickness (t2) in a range of 2.5 millimetres to 3.0 millimetres, the second layer maintains a circular cross section of the optical fiber cable, the second layer reduces ovality of the optical fiber cable to at least 5 percent, the second layer has a free space in a range of 1.26 millimetres to 1.66 millimetres, the third layer is made of a first sub layer and a second sub layer, the first sub layer of the third layer concentrically surrounds the second layer, the second sub layer of the third layer concentrically surrounds the first sub layer, the second sub layer of the third layer has a third thickness (t₃) in a range of 0.15 ± 0.025 millimetres, the first sub layer of the third layer and the second sub layer of the third layer are bonded, the first sub layer of the third layer and the second sub layer of the third layer are bonded with at least one of glue, epoxy resins and polyester resins, the fourth layer has a second diameter (d₂) in a range of 14 millimetres to 16 millimetres, the fourth layer has a fourth thickness (t₄) in a range of 1.5 millimetres to 1.7 millimetres, each pair of strength members of the two pairs of strength members are symmetrically placed inside the second layer, the two pairs of strength members are placed 180 degree apart inside the second layer.

The first layer is a water blocking tape. The second layer is made of low smoke zero halogen (LSZH).

The first sub layer of the third layer may be made of a water blocking material. The second sub layer of the third layer may be made of electrolytic chrome coated steel tape. The fourth layer may be made of polypropylene.

The optical fiber cable may further comprise a plurality of ripcords positioned between the second layer and the first sub layer of the third layer and extending parallel to the longitudinal axis of the optical fiber cable. The plurality of ripcords may be made of polyester based twisted yarns.

The two pairs of strength members may be made of at least one of fiber reinforced plastic and steel wire.

Each strength member of the two pairs of strength members may have a third diameter (d₃) in a range of 1.4 millimeters to 1.6 millimeters.

Each of the two pairs of strength members may comprise a first strength member and a second strength member. The distance between the first strength member and the second strength member may be in a range of 0.1 millimeter to 0.4 millimeter

The second layer may have a fill factor in a range of 0.35 to 0.40.

The optical fiber cable may have no armoring and may have an inner fill factor in a range of 0.055 to 0.065. The optical fiber cable with no armoring may have an overall fill factor in a range of 0.034 to 0.041.

The second layer may be at a diagonal distance of 4.95 millimeters from the plurality of optical fiber ribbons.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

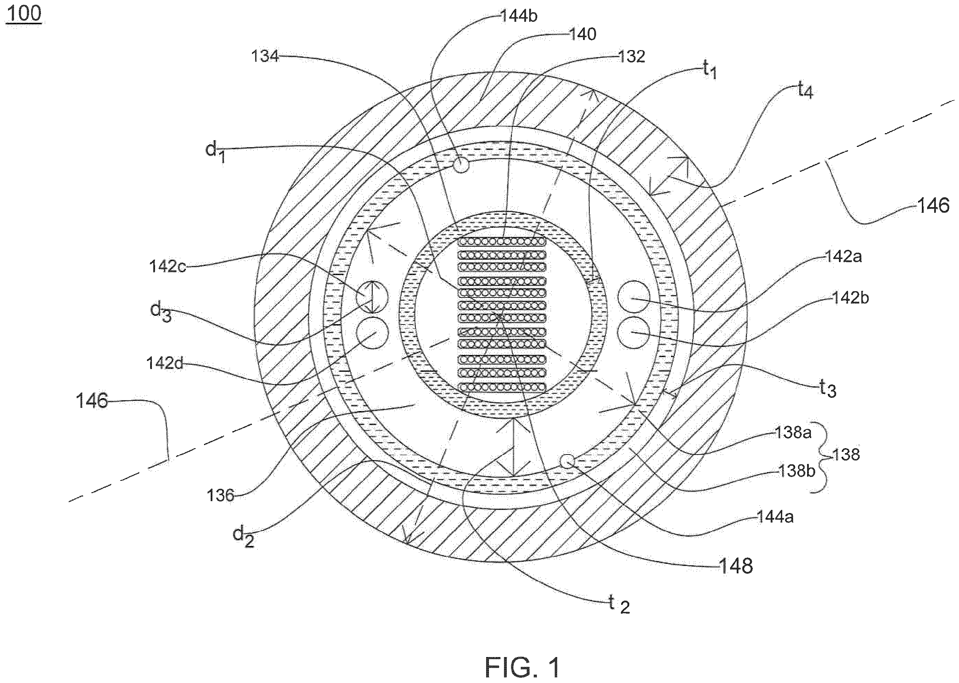

FIG. 1 illustrates a cross sectional view of an optical fiber cable, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1** illustrates a cross-sectional view of optical fiber cable **100** for indoor and outdoor applications, in accordance with an embodiment of the present disclosure. Further, the optical fiber cable **100** is used for aerial installations, underground installations, indoor installations and the like. Also, the optical fiber cable **100** is used for broadband applications, communication applications and the like. The cross sectional view describes a layered structure and distribution of discrete elements of the optical fiber cable **100.** The layered structure of the optical fiber cable **100** includes a plurality of optical fibers ribbons **132,** a first layer **134,** a second layer **136,** a third layer **138** and a fourth layer **140.** In addition, the optical fiber cable **100** includes two pairs of strength members **142a-142d** and one or more ripcords. The above combination of structural elements enables an improvement in a plurality of parameters of the optical fiber cable **100.** The plurality of parameters includes a tensile strength, bend radius, flexibility, a crush resistance, installation efficiency, and the like.

The optical fiber cable **100** includes the plurality of optical fibers ribbons **132.** The plurality of optical fibers ribbons **132** lie substantially along a longitudinal axis **146** of the optical fiber cable **100.** The longitudinal axis **146** passes through a geometrical center **148** of the optical fiber cable **100.** The longitudinal axis **146** is an imaginary axis passing through the geometrical center **148** of the optical fiber cable **100.** In general, multiple optical fibers are sandwiched, encapsulated, and/or edge bonded to form an optical-fiber ribbon. Optical fiber ribbon may be defined as an encapsulated optical fiber. In general, each of the plurality of optical fibers, in the plurality of optical fibers ribbons **132** is a fiber used for transmitting information as light pulses from one end of the optical fiber cable **100** to another end of the optical fiber cable **100.** In addition, each of the plurality of optical fibers is a thin strand of glass capable of transmitting optical signals. Also, each of the plurality of optical fibers is configured to transmit large amounts of information over long distances with relatively low attenuation. Further, each of the plurality of optical fibers includes a core region and a cladding region. The core region is an inner part of an optical fiber and the cladding section is an outer part of the optical fiber. Moreover, the core region is defined by a central longitudinal axis **146** of each of the plurality of optical fibers. In addition, the cladding region surrounds the core region.

In an embodiment of the present disclosure, the number of optical fibers in one ribbon is constant in all plurality of ribbons. In another embodiment of the present disclosure, the number of optical fibers in one ribbon may vary. Further, the plurality of optical-fiber ribbons **132** is aggregated to form a ribbon stack. The ribbon stack has various sizes and shapes as per number of fibers in a ribbon. In an embodiment of the present disclosure, optical fiber ribbons **132** are arranged to form a rectangular ribbon stack. In another embodiment of the present disclosure, the plurality of optical fiber ribbons **132** may arrange to form any different shape.

In an embodiment of the present disclosure, the plurality of optical fibers in the plurality of optical fibers ribbons **132** has a fiber attenuation of about 0.4dB/km at a wavelength of about 1310 nanometers. In another embodiment of the present disclosure, the plurality of optical fibers in the plurality of optical fibers ribbons **132** has a fiber attenuation of about 0.40dB/km at a wavelength of 1383 nanometers. In yet another embodiment of the present disclosure, the plurality of optical fibers in the plurality of optical fibers ribbons **132** has a fiber attenuation of about 0.30dB/km at a wavelength of 1550 nanometers. In yet another embodiment of the present disclosure, the plurality of optical fibers in the plurality of optical fibers ribbons **132** may have different fiber attenuation at respective wavelength. The fiber attenuation corresponds to a loss in optical power as the light travels through the optical fiber. In an embodiment of the present disclosure, the plurality of optical fibers in the plurality of optical fibers ribbons **132** is single mode optical fibers. In another embodiment of the present disclosure, the plurality of optical fibers in the plurality of optical fibers ribbons is multi-mode optical fibers. In an embodiment of the present disclosure, the optical fiber cable **100** includes 144 optical fibers.

The optical fiber cable **100** includes the first layer **134.** The first layer **134** surrounds the plurality of optical fibers ribbons **132.** The first layer **134** is a water blocking tape. The water blocking tape is used to prevent ingression of water and moisture inside the core of the optical fiber cable **100.** The core is a region enclosed by the first layer **134** of the optical fiber cable **100.** The first layer **134** is characterized by a first thickness **t₁**. Further, the first thicknessti of the first layer is in a range of about 0.2 millimeter to 0.3millimeter. In an embodiment of the present disclosure, the thickness of the first layer **134** has any suitable thickness.

The optical fiber cable **100** includes the second layer **136.** The second layer **136** concentrically surrounds the first layer **134.** The second layer **136** is a dry buffer tube layer. The dry buffer tube layer does not contain any gel, grease and the like. The buffer tube lying substantially along the longitudinal axis **146** of the optical fiber cable **100.** In addition, the second layer **136** provides mechanical isolation, physical damage protection and identification of each of the plurality of optical fibers ribbons **132.** Further, the buffer tube layer prevents ingression of water inside the optical fiber ribbons. The second layer **136** is made of low smoke zero halogen (LSZH) material. The low smoke zero halogen (LSZH) reduces an amount of toxic and corrosive gas emitted during combustion. The second layer **136** is characterized by a first diameter **d₁**. Further, the first diameter **d₁** of the second layer **136** is in a range of about 11 millimeters to 12 millimeters. In an embodiment of the present disclosure, the first diameter **d₁** of the second layer is in any suitable range. The second layer **136** is characterized by a second thickness **t₂**. Further the second thickness **t₂** of the second layer **136** is in a range of about 2.5 millimeters to 3.0 millimeters. In an embodiment of the present disclosure, the second layer **136** is characterized by the second thickness **t₂** in any suitable range. The low smoke zero halogen (LSZH) material is used to produce dry buffer tube to maintain circular cross-section of the optical fiber cable **100.** Moreover, the low smoke zero halogen (LSZH) material is used to reduce the ovality of the optical fiber cable **100** to at least 5 percent. Generally, ovality is defined as the degree of deviation from the perfect circularity of the cross section of the optical fiber cable. In an embodiment of the present disclosure, Low smoke zero halogen has a very low melt flow index and very high melt strength. These properties help manufacturing the buffer tube without using vacuum calibrator. It results in reduction of ovality of tube which in turn reduces the ovality of the overall cable. In addition, the low smoke zero halogen (LSZH) material is used to ease the installation in mid-spanning. In an embodiment of the present disclosure, the second layer **136** is made of any other suitable material. In an embodiment of the present disclosure, the dry loose tube layer has a fill factor in a range of about 0.35 - 0.40. The fill factor is defined as a ratio of area of ribbon stack to inner area of the dry loose tube. The optical fiber cable **100** is optimized to achieve the fill factor in a range of about 0.35 - 0.40 for the dry loose tube layer. Generally, if the fill factor is more than 0.4, it imposes attenuation problems. If the fill factor is less than 0.35, it makes the cable bulky and increases the chances of water penetration inside the cable. In an embodiment of the present disclosure, the dry loose tube layer is at a diagonal distance of about 4.95 millimeters from the plurality of optical fiber ribbons **132.** When the ribbons are placed in stacks inside the buffer tube, the diagonal distance is defined as the theoretical distance between the inner wall of the buffer tube and one of the edges of the ribbon stack.

The optical fiber cable **100** includes the third layer **138.** The third layer **138** is made of a first sub layer **138a** and a second sub layer **138b.** The first sub layer **138a** surrounds the second layer **136** and the second sub layer **138b** surrounds the first sub layer **138a.** The first sub layer **138a** is made of a water blocking material and the second sub layer **138b** is made of electrolytic chrome coated steel tape. The first sub layer **138a** may have any suitable thickness. The second sub layer **138b** has a third thickness **t₃** in a range of about 0.15 + 0.025 millimeters. The third layer **138** is a sandwich of two layers made of water blocking material and ECCS tape. The ECCS tape is a metallic armor. In an embodiment of the present disclosure, the first sub layer **138a** and the second sub layer **138b** are bonded. The first sub layer **138a** and the second sub layer **138b** are bonded with at least one of glue, epoxy resins and polyester resins. In an embodiment of the present disclosure, the first sub layer **138a** and the second sub layer **138b** may be bonded with any other suitable bonding material. In an embodiment of the present disclosure, the bonding of the first sub layer **138a** with the second sub layer **138b** helps in maintaining good integrity with different layers of the optical fiber cable **100** during the bending of the optical fiber cable **100** or pulling of the optical fiber cable **100** during installation. In an embodiment of the present disclosure, the ECCS tape has a coating over its surface area. In an embodiment of the present disclosure, the coating is made of a copolymer. In an embodiment of the present disclosure, the coating helps in bonding of the ECCS tape with the Water Blocking Tape. In another embodiment of the present disclosure, the coating on the ECCS tape helps the tape in bonding with outer jacket. In yet another embodiment of the present disclosure, the coating on the ECCS tape helps in bonding of the ECCS tape with any other layer of the optical fiber cable **100.** In an embodiment of the present disclosure, the copolymer coating is made using ethylene acrylic acid (EAA). In an embodiment of the present disclosure, the first sub layer **138a** and the second sub layer **138b** is in physical contact with each other.

In an embodiment of the present disclosure, the optical fiber cable **100** does not include any metallic armor. In an embodiment of the present disclosure, the metallic armor is made of a corrugated electrolytic chrome-coated steel (ECCS) tape. The corrugated ECCS tape is used to limit the signal attenuation during fire. In another embodiment of the present disclosure, the metallic armor might be separated from water swellable layer. In another embodiment of the present disclosure, the armor is made of flat fiber reinforced plastic (FRP). In yet another embodiment of the present disclosure, the metallic armor is made of steel wire. In yet another embodiment of the present disclosure, the metallic armor is made of steel tape. In yet another embodiment of the present disclosure, the armor is made of glass roving yarns. In yet another embodiment of the present disclosure, the armor is made of aramid yarns. In yet another embodiment of the present disclosure, the armor is made of any other suitable material.

The optical fiber cable **100** includes the fourth layer **140.** The fourth layer **140** concentrically surrounds the third layer **138.** The fourth layer **140** is a sheath made of polypropylene. In an embodiment of the present disclosure, the fourth layer **140** is made of any other suitable material. In an example, the other suitable material includes polyamide 12, low smoke zero halogen, High density polyethylene material (hereinafter "HDPE") and Medium density polyethylene material (hereinafter "MDPE"). The fourth layer **140** protects the optical fiber cable **100** from harsh environment and harmful UV rays. In addition, the fourth layer **140** has the inherent ability to resist crushes, kinks and tensile stress. The fourth layer **140** is characterized by a second diameter **d₂**. The second diameter **d₂** is an outer diameter of the fourth layer **140**. The second diameter **d₂** of the fourth layer **140** is in a range of about 14 millimeters to 16 millimeters. The fourth layer **140** is characterized by a fourth thickness **t₄**. Further the fourth thickness **t₄** of the fourth layer **140** is in a range of about 1.5 millimeters to 1.7 millimeters. In an embodiment of the present disclosure, the fourth layer **140** characterized by the second diameter **d₂** is in any suitable range. In an embodiment of the present disclosure, the fourth layer **140** characterized by the fourth thickness **t₄** is in any suitable range.

The optical fiber cable **100** includes the two pairs of strength member's **142a-d.** The two pairs of strength member's **142a-d** are embedded longitudinally inside the second layer **136.** Further, each of the two pairs of strength member's **142a-d** is uniformly distributed inside the second layer **136.** Further, the two pairs of strength member's **142a-d** are spaced 180 degree apart. In an embodiment of the present disclosure, the two pairs of strength member's **142a-d** are circular in cross section. In general, the two pairs of strength member's **142a-d** are embedded in the second layer **136** to improve bend radius and flexibility of the optical fiber cable **100.** In addition, the two pairs of strength member's **142a-d** are embedded in the second layer **136** to restrict shrinkage of layers of optical fiber cable **100** during thermal cycling. Moreover, the two pairs of strength member's **142a-d** provide robustness and tensile strength to the optical fiber cable **100.** The two pairs of strength member's **142a-d** are made of at least one of fiber reinforced plastic (FRP) and steel wire. In an embodiment of the present disclosure, the pairs of strength members **142a-d** are made of any other suitable material. In an embodiment of the present disclosure, the number of strength members in the optical fiber cable **100** is 4. In another embodiment of the present disclosure, the number of strength members may vary.

In an embodiment of the present disclosure, the two pairs of strength members **142a-b; 142c-d** are spaced 180 degree apart. The two pairs of strength member's **142a-d** include a first pair of strength members and a second pair of strength members. The first pair of strength members includes a first strength member **142a** and a second strength member **142b.** The second pair of strength members includes a first strength member **142c** and a second strength member **142d.** The first strength member **142a** and the second strength member **142b** are separated by a distance. The distance between the first strength members **142a** and the second strength member **142b** is in the range of 0.1 millimeter to 0.4 millimeter. The closeness of the strength members induces better flexibility to the optical fiber cable **100.** The optical fiber cable **100** is optimized for flexibility and bending by keeping the distance between the first strength member and second strength member of both the pairs of strength members in the range of 0.1 mm to 0.4 mm. In an embodiment of the present disclosure, the distance between the first strength members **142a** and the second strength member **142b** may have any suitable range. In addition, each strength member of the two pairs of strength members **142** is characterized by a third diameter **d₃**. Further, the third diameter **d₃** of each strength member of the two pairs of strength member is in a range of about 1.4 millimeters to 1.8 millimeters. In an embodiment of the present disclosure, the third diameter **d₃** of each strength member of the two pairs of strength members is in any suitable range.

The optical fiber cable **100** includes a plurality of ripcords **144a-144b.** The plurality of ripcords **144a-144b** lies substantially along the longitudinal axis **146** of the optical fiber cable **100.** The plurality of ripcords **144a-144b** facilitates easy access to the plurality of optical fibers. In an embodiment of the present disclosure, the number of ripcords present in the optical fiber cable **100** is 2. In another embodiment of the present disclosure, the number of ripcords in the optical fiber cable **100** may vary. In an embodiment of the present disclosure, the position of the plurality of ripcords **144a-144b** is between the second layer **136** and the first sub layer **138a** of the third layer **138.** In another embodiment of the present disclosure, the plurality of ripcords **144a-144b** is embedded in any one of the layers. In an embodiment of the present disclosure, the plurality of ripcords **144a-144b** is made of polyester based twisted yarns. In another embodiment of the present disclosure, the plurality of ripcords **144a-144b** is made of any other suitable material.

In an embodiment of the present disclosure, the optical fiber cable **100** with 144 optical fibers and no armoring has an inner fill factor in a range of about 0.055 - 0.065. The inner fill factor of the optical fiber cable **100** is defined as a ratio of sum of area of optical fibers to cross-sectional area of bore formed by sheath (the fourth layer **140**). In an embodiment of the present disclosure, the optical fiber cable with 144 optical fibers and no armoring has an overall fill factor in a range of about 0.034 - 0.041. The overall fill factor of the optical fiber cable **100** is defined as a ratio of sum of area of optical fibers to cross-sectional area of the optical fiber cable **100.** In an embodiment of the present disclosure, the dry loose tube layer has a free space in a range of about 1.26 millimeters - 1.66 millimeters. The free space of the dry loose tube layer is equal to buffer tube inner diameter minus diagonal distance of ribbon stack. The free space in a range of about 1.26 millimeters - 1.66 millimeters is for optimizing optical performance and water blocking performance of the optical fiber cable **100.**

The optical fiber cable **100** is used for installation in ducts and micro ducts. The optical fiber cable **100** is used for indoor and outdoor applications. The optical fiber cable **100** is used without any grounding requirements. The optical fiber cable **100** is a ribbon type optical fiber cable. In general, ribbon cables have inherent advantage of mass fusion splicing. The mass fusion splicing makes the installation easy and saves a lot of time. Ribbon cables offer high packing density and higher fiber counts which enables more efficient use of limited duct space. The optical fiber cable **100** improves the blowing performance of the cable.

In an embodiment of the present disclosure, the optical fiber cable **100** includes a plurality of colored optical fibers. The color of each of the plurality of optical fibers is selected from a group. The group includes blue, orange, green, brown, slate, white, red, black, yellow, violet, pink and aqua. The plurality of optical fibers is present inside a white color buffer tube. The plurality of optical fibers might also be present inside any other colored buffer tube.

The optical fiber cable disclosed above is significant because of its overall structure and positioning of the strength members. The positioning of the strength members in the buffer tube layer prevent preferential bending of the optical fiber cable especially during blowing of the optical fiber cable. Further, the positioning of the strength members in the buffer tube induce flexibility in the optical fiber cable leading to easier installation. The closeness of the strength members induces better flexibility to the optical fiber cable. The optical fiber cable disclosed above is optimized for flexibility and bending by keeping the distance between the first strength member and second strength member of both the pairs of strength members in the range of 0.1 mm to 0.4 mm. Further, the free space in the dry loose tube layer is maintained in a range of about 1.26 millimeters - 1.66 millimeters for optimizing the optical performance and water blocking performance of the optical fiber cable as disclosed above. Furthermore, the optical fiber cable is optimized to achieve the fill factor in a range of about 0.35 - 0.40 for the dry loose tube layer. The optimization of the fill factor helps to avoids attenuation problems in the optical fiber cable. In addition, the optimization of the fill factor prevents bulkiness in the cable which in turn decreases the chances of water penetration inside the optical fiber cable.

The optical fiber cable of the present disclosure is significant over the prior arts because it offers various advantages over the conventional cables. The optical fiber cable is a ribbon cable which has an inherent advantage of mass fusion splicing to make the installation easy and saves a lot of time. Moreover, the ribbon cables having dry buffer and dry core reduces preparation time due to absence of gel. Furthermore, the optical fiber cable with the first layer and one of the sub layers of the third layer of water blocking tape meets the water penetration test. The low smoke zero halogen material used for the loose tube is softer than polypropylene, polybutylene terephthalate and high density polyethylene. This increases ease of installation and thus improves overall installation efficiency. The low smoke zero halogen material doesn't need any additional equipment for achieving low ovality of a dry buffer tube. This improves the process efficiency. The combination of buffer tube made of low smoke zero halogen and outer jacket made of polyethylene provides environmental protection. The sandwich layers of water blocking tape and ECCS tape reduces one process of material input in manufacturing and helps in both water penetration and armoring of cable.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber cable (100) comprising:
a plurality of optical fiber ribbons (132) lying substantially along a longitudinal axis (146) passing through a geometrical center (148) of the optical fiber cable (100);
a first layer (134) surrounding the plurality of optical fiber ribbons (132);
a second layer (136) concentrically surrounding the first layer (134), wherein the second layer (136) is a dry loose tube layer;
a third layer (138) concentrically surrounding the second layer (136);
a fourth layer (140) concentrically surrounding the third layer (138); and
two pairs of strength members (142a-b; 142c-d) embedded inside the second layer (136),
wherein the first layer (134) is a water blocking tape, having a first thickness (t 1) in a range of 0.2 millimetre to 0.3 millimetre, the second layer (136) being made of low smoke zero halogen (LSZH) and having a first diameter (d1) in a range of 11 millimetres to 12 millimetres, the second layer (136) has a second thickness (t2) in a range of 2.5 millimetres to 3.0 millimetres, the second layer (136) maintains a circular cross section of the optical fiber cable (100), the second layer (136) reduces ovality of the optical fiber cable (100) to at least 5 percent, the second layer (136) has a free space in a range of 1.26 millimetres to 1.66 millimetres, the third layer (138) is made of a first sub layer (138a) and a second sub layer (138b), the first sub layer (138a) of the third layer (138) concentrically surrounds the second layer (136), the second sub layer (138b) of the third layer (138) concentrically surrounds the first sub layer (138a), the second sub layer (138b) of the third layer (138) has a third thickness (t 3) in a range of 0.15 ± 0.025 millimetres, the first sub layer (138a) of the third layer (138) and the second sub layer (138b) of the third layer (138) are bonded, the first sub layer (138a) of the third layer (138) and the second sub layer (138b) of the third layer (138) are bonded with at least one of glue, epoxy resins and polyester resins, the fourth layer (140) has a second diameter (d 2) in a range of 14 millimetres to 16 millimetres, the fourth layer (140) has a fourth thickness (t 4) in a range of 1.5 millimetres to 1.7 millimetres, each pair of strength members of the two pairs of strength members (142a-b; 142c-d) are symmetrically placed inside the second layer (136), the two pairs of strength members (142a-b; 142c-d) are placed 180 degree apart inside the second layer (136).

2. The optical fiber cable (100) as claimed in claim 1, wherein the first sub layer (138a) of the third layer (138) is made of a water blocking material.

3. The optical fiber cable (100) as claimed in any preceding claim, wherein the second sub layer (138b) of the third layer (138) is made of electrolytic chrome coated steel tape.

4. The optical fiber cable (100) as claimed in any preceding claim, wherein the fourth layer (140) is made of polypropylene.

5. The optical fiber cable (100) as claimed in any preceding claim, further comprising a plurality of ripcords (144a-144b) positioned between the second layer (136) and the first sub layer (138a) of the third layer (138) and extending parallel to the longitudinal axis (146) of the optical fiber cable (100), wherein the plurality of ripcords (144a-144b) are made of polyester based twisted yarns.

6. The optical fiber cable (100) as claimed in any preceding claim, wherein the two pairs of strength members (142a-b; 142c-d) are made of at least one of fiber reinforced plastic and steel wire.

7. The optical fiber cable (100) as claimed in any preceding claim, wherein each strength member of the two pairs of strength members (142a-b; 142c-d) has a third diameter (d 3) in a range of 1.4 millimeters to 1.6 millimeters.

8. The optical fiber cable (100) as claimed in any preceding claim, wherein each of the two pairs of strength members (142a-b; 142c-d) comprises a first strength member (142a, 142c) and a second strength member (142b, 142d), wherein a distance between the first strength member (142a, 142c) and the second strength member (142b, 142d) is in a range of 0.1 millimeter to 0.4 millimeter.

9. The optical fiber cable (100) as claimed in any preceding claim, wherein the second layer (136) has a fill factor in a range of 0.35 to 0.40.

10. The optical fiber cable (100) as claimed in any preceding claim, wherein the optical fiber cable (100) has no armoring and has an inner fill factor in a range of 0.055 to 0.065.

11. The optical fiber cable (100) as claimed in claim 10, wherein the optical fiber cable (100) with no armoring has an overall fill factor in a range of 0.034 to 0.041.

12. The optical fiber cable (100) as claimed in any preceding claim, wherein the second layer (136) is at a diagonal distance of 4.95 millimeters from the plurality of optical fiber ribbons (132).

## Patentansprüche

1. Lichtleiterkabel (100), das Folgendes aufweist:
- eine Vielzahl von Lichtleiterbändern (132), die im Wesentlichen entlang einer Längsachse (146) verlaufen, welche durch ein geometrisches Zentrum (148) des Lichtleiterkabels (100) geht;
- eine erste Schicht (134), die die Vielzahl von Lichtleiterbändern (132) umgibt;
- eine zweite Schicht (136), die die erste Schicht (134) konzentrisch umgibt, wobei die zweite Schicht (136) eine trockene Bündeladerschicht ist;
- eine dritte Schicht (138), die die zweite Schicht (136) konzentrisch umgibt;
- eine vierte Schicht (140), die die dritte Schicht (138) konzentrisch umgibt; und
- zwei Paare von Verstärkungselementen (142a-142b; 142c-142d), die innerhalb der zweiten Schicht (136) eingebettet sind,
wobei die erste Schicht (134) ein wasserblockierendes Band mit einer ersten Dicke (t1) in einem Bereich von 0,2 mm bis 0,3 mm ist, wobei die zweite Schicht (136) aus einem raucharmen, halogenfreien (LSZH) Material mit einem ersten Durchmesser (d1) im Bereich von 11 mm bis 12 mm ist, wobei die zweite Schicht (136) eine zweite Dicke (t2) in einem Bereich von 2,5 mm bis 3,0 mm besitzt, wobei die zweite Schicht (136) einen kreisförmigen Querschnitt des Lichtleiterkabels (100) aufrecht erhält, wobei die zweite Schicht (136) die Ovalität des Lichtleiterkabels (100) bis mindestens 5 % reduziert, wobei die zweite Schicht (136) einen freien Raum in einem Bereich von 1,26 mm bis 1,66 mm aufweist, wobei die dritte Schicht (138) aus einer ersten Unterschicht (138a) und einer zweiten Unterschicht (138b) hergestellt ist, wobei die erste Unterschicht (138a) der dritten Schicht (138) die zweite Schicht (136) konzentrisch umgibt, wobei die zweite Unterschicht (138b) der dritten Schicht (138) die erste Unterschicht (138a) konzentrisch umgibt, wobei die zweite Unterschicht (138b) der dritten Schicht (138) eine dritte Dicke (t3) in einem Bereich von 0,15 ± 0,025 mm aufweist, wobei die erste Unterschicht (138a) der dritten Schicht (138) und die zweite Unterschicht (138b) der dritten Schicht (138) verbunden sind, wobei die erste Unterschicht (138a) der dritten Schicht (138) und die zweite Unterschicht (138b) der dritten Schicht (138) zumindest mit einem Material von Kleber, Epoxidharzen und Polyesterharzen verbunden sind, wobei die vierte Schicht (140) einen zweiten Durchmesser (d2) in einem Bereich von 14 mm bis 16 mm aufweist, wobei die vierte Schicht (140) eine vierte Dicke (t4) in einem Bereich von 1,5 mm bis 1,7 mm aufweist, wobei jedes Paar von Verstärkungselementen der zwei Paare von Verstärkungselementen (142a-142b; 142c-142d) symmetrisch innerhalb der zweiten Schicht (136) angeordnet sind, wobei die zwei Paare von Verstärkungselementen (142a-142b; 142c-142d) innerhalb der zweiten Schicht (136) um 180° beabstandet voneinander angeordnet sind.

2. Lichtleiterkabel (100) gemäß Anspruch 1,
wobei die erste Unterschicht (138a) der dritten Schicht (138) aus einem wasserblockierenden Material hergestellt ist.

3. Lichtleiterkabel (100) gemäß einem der vorhergehenden Ansprüche,
wobei die zweite Unterschicht (138b) der dritten Schicht (138) aus einem elektrolytisch chrombeschichteten Stahlband hergestellt ist.

4. Lichtleiterkabel (100) gemäß einem der vorhergehenden Ansprüche,
wobei die vierte Schicht (140) aus Polypropylen hergestellt ist.

5. Lichtleiterkabel (100) gemäß einem der vorhergehenden Ansprüche,
wobei das Lichtleiterkabel (100) ferner eine Vielzahl von Reißleinen (144a-144b) aufweist, die zwischen der zweiten Schicht (136) und der ersten Unterschicht (138a) der dritten Schicht (138) angeordnet sind, und die sich parallel zu der Längsachse (146) des Lichtleiterkabels (100) erstrecken, wobei die Vielzahl von Reißleinen (144a-144b) aus polyesterbasierten gezwirnten Garnen hergestellt sind.

6. Lichtleiterkabel (100) gemäß einem der vorhergehenden Ansprüche,
wobei die zwei Paare von Verstärkungselementen (142a-142b; 142c-142d) aus mindestens einem Material von faserverstärktem Kunststoff und Stahldraht hergestellt sind.

7. Lichtleiterkabel (100) gemäß einem der vorhergehenden Ansprüche,
wobei jedes Verstärkungselement der zwei Paare von Verstärkungselementen (142a-142b; 142c-142d) einen dritten Durchmesser (d3) in einem Bereich von 1,4 mm bis 1,6 mm aufweist.

8. Lichtleiterkabel (100) gemäß einem der vorhergehenden Ansprüche,
wobei jedes der zwei Paare von Verstärkungselementen (142a-142b; 142c-142d) ein erstes Verstärkungselement (142a,142c) und ein zweites Verstärkungselement (142b, 142d) aufweist, wobei der Abstand zwischen dem ersten Verstärkungselement (142a, 142c) und dem zweiten Verstärkungselement (142b, 142d) in einem Bereich von 0,1 mm bis 0,4 mm liegt.

9. Lichtleiterkabel (100) gemäß einem der vorhergehenden Ansprüche,
wobei die zweite Schicht (136) einen Füllfaktor im Bereich von 0,35 bis 0,40 aufweist.

10. Lichtleiterkabel (100) gemäß einem der vorhergehenden Ansprüche,
wobei das Lichtleiterkabel (100) keine Armierung und einen inneren Füllfaktor im Bereich von 0,055 bis 0,065 aufweist.

11. Lichtleiterkabel (100) gemäß Anspruch 10,
wobei das Lichtleiterkabel (100) ohne Armierung einen Gesamtfüllfaktor im Bereich von 0,034 bis 0,041 aufweist.

12. Lichtleiterkabel (100) gemäß einem der vorhergehenden Ansprüche,
wobei die zweite Schicht (136) in einem diagonalen Abstand von 4,95 mm von der Vielzahl von Lichtleiterbändern (132) angeordnet ist.

## Revendications

1. Câble à fibre optique (100) comprenant :
une pluralité de rubans à fibre optique (132) posée sensiblement le long d'un axe longitudinal (146) passant à travers un centre géométrique (148) du câble à fibre optique (100) ;
une première couche (134) entourant la pluralité de rubans à fibre optique (132) ;
une deuxième couche (136) entourant de manière concentrique la première couche (134), selon lequel la deuxième couche (136) est une couche tubulaire sèche non-serrée ;
une troisième couche (138) entourant de manière concentrique la deuxième couche (136) ;
une quatrième couche (140) entourant de manière concentrique la troisième couche (138) ; et
deux paires d'organes de renfort (142a-b; 142c-d) encastrées dans la deuxième couche (136),
selon lequel la première couche (134) est un ruban imperméable à l'eau, présentant une première épaisseur (t1) se situant dans une plage de 0,2 millimètre à 0,3 millimètre, la deuxième couche (136) étant constituée d'un matériau à basse fumée et à teneur zéro en halogénure (LSZH) et présentant un premier diamètre (d1) se situant dans une plage de 11 millimètres à 12 millimètres, la deuxième couche (136) présentant une deuxième épaisseur (t2) se situant dans une fourchette de 2,5 millimètres à 3,0 millimètres, la deuxième couche (136) maintenant une section transversale circulaire du câble à fibre optique (100), la deuxième couche (136) diminuant l'ovalisation du câble à fibre optique (100) à au moins 5 pourcent, la deuxième couche (136) présentant un espace libre se situant dans une plage de 1,26 millimètres à 1,66 millimètres, la troisième couche (138) étant constituée d'une première sous-couche (138a) et d'une deuxième sous-couche (138b), la première sous-couche (138a) de la troisième couche (138) entourant de manière concentrique la deuxième couche (136), la deuxième sous-couche (138b) de la troisième couche (138) entourant de manière concentrique la première sous-couche (138a), la deuxième sous-couche (138b) de la troisième couche (138) présentant une troisième épaisseur (t3) se situant dans une plage de 0,15 ± 0,025 millimètres, la première sous-couche (138a) de la troisième couche (138) et la deuxième sous-couche (138b) de la troisième couche (138) étant fixées l'une à l'autre, la première sous-couche (138a) de la troisième couche (138) et la deuxième sous-couche (138b) de la troisième couche (138) étant fixées l'une à l'autre par le biais d'au moins un élément parmi une colle, une résine époxy et des résines polyester, la quatrième couche (140) présentant un deuxième diamètre (d2) se situant dans une plage de 14 millimètres à 16 millimètres, la quatrième couche (140) présentant une quatrième épaisseur (t4) se situant dans une plage de 1,5 millimètres à 1,7 millimètres, chaque paire d'organes de renfort des deux paires d'organes de renfort (142a-b; 142c-d) étant placée de manière symétrique à l'intérieur de la deuxième couche (136), les deux paires d'organes de renfort (142a-b; 142c-d) étant placées à 180° l'une de l'autre à l'intérieur de la deuxième couche (136).

2. Câble à fibre optique (100) selon la revendication 1, selon lequel la première sous-couche (138a) de la troisième couche (138) est constituée d'un matériau imperméable à l'eau.

3. Câble à fibre optique (100) selon l'une quelconque des revendications précédentes, selon lequel la deuxième sous-couche (138b) de la troisième couche (138) est constituée de ruban d'acier à revêtement électrolytique de chrome.

4. Câble à fibre optique (100) selon l'une quelconque des revendications précédentes, selon lequel la quatrième couche (140) est constituée de polypropylène.

5. Câble à fibre optique (100) selon l'une quelconque des revendications précédentes, comprenant en outre une pluralité de cordes de déchirure (144a-144b) positionnée entre la deuxième couche (136) et la première sous-couche (138a) de la troisième couche (138) s'étendant en parallèle à l'axe longitudinal (146) du câble à fibre optique (100), selon lequel la pluralité de cordes de déchirure (144a-144b) est constituée de fils à base de polyester torsadés.

6. Câble à fibre optique (100) selon l'une quelconque des revendications précédentes, selon lequel les deux paires d'organes de renfort (142a-b; 142c-d) sont constituées d'au moins un élément parmi du plastic à renfort de fibres ou du fil d'acier.

7. Câble à fibre optique (100) selon l'une quelconque des revendications précédentes, selon lequel chaque organe de renfort des deux paires d'organes de renfort (142a-b; 142c-d) présente un troisième diamètre (d3) se situant dans une plage de 1,4 millimètres à 1,6 millimètres.

8. Câble à fibre optique (100) selon l'une quelconque des revendications précédentes, selon lequel chacune des deux paires d'organes de renfort (142a-b; 142c-d) comprend un premier organe de renfort (142a, 142c) et un deuxième organe de renfort (142b, 142d), selon lequel une distance entre le premier organe de renfort (142a, 142c) et le deuxième organe de renfort (142b, 142d) se situe dans une plage de 0,1 millimètre à 0,4 millimètre.

9. Câble à fibre optique (100) selon l'une quelconque des revendications précédentes, selon lequel la deuxième couche (136) présente un taux de remplissage se situant dans une plage de 0,35 à 0,40.

10. Câble à fibre optique (100) selon l'une quelconque des revendications précédentes, selon lequel le câble à fibre optique (100) ne présente pas d'armure et présente un taux de remplissage interne se situant dans une plage de 0,055 à 0,065.

11. Câble à fibre optique (100) selon la revendication 10, selon lequel le câble à fibre optique (100) sans armure présente un taux de remplissage global se situant dans une plage de 0,034 à 0,041.

12. Câble à fibre optique (100) selon l'une quelconque des revendications précédentes, selon lequel la deuxième couche (136) se situe à une distance de 4,95 millimètres de la pluralité de rubans à fibre optique (132).
